# EUROPEAN PATENT APPLICATION

(11) **EP 4 618 263 A1**
(43) Date of publication of application: **17.09.2025**
(21) Application number: 23894976.2
(22) Date of filing: 20.11.2023
(51) Int. Cl.: H01M 50/105, H01M 50/178, H01M 50/107, H01M 50/103, H01M 50/186, H01M 50/152, H01M 50/15, H01M 10/04, H01M 10/658

(54) **HIGH VOLTAGE POUCH BATTERY CELL**

(30) Priority: 21.11.2022 KR 20220156367
(71) Applicant: LG Energy Solution, Ltd., Seoul 07335 (KR)
(72) Inventor: LEE, Junghoon, Daejeon 34122 (KR); JUNG, Hyemi, Daejeon 34122 (KR); PARK, Minsoo, Daejeon 34122 (KR)
(74) Representative: Plasseraud IP
(86) International application number: PCT/KR2023/018711
(87) International publication number: WO 2024/112048

(57) **Abstract**

The present invention provides a pouch-type battery cell and a battery pack including the same, the pouch-type battery cell including: an electrode assembly having therein a first electrode and a second electrode alternately stacked with a separator therebetween; a pouch accommodating the electrode assembly; and a first electrode lead and a second electrode lead extending from the first electrode and the second electrode, respectively, and protruding out of the pouch, wherein the first electrode, the second electrode and the separator are stacked in axial direction, and the pouch made of a flexible sheet includes: a peripheral member covering an outer circumferential surface of the electrode assembly; and a pair of lid members covering the two axial ends of the electrode assembly, respectively.

## Description

### [TECHNICAL FIELD]

This application claims the benefit of priority based on Korean Patent Application No. 10-2022-0156367 filed on November 21, 2022, entire content disclosed in the document of the patent applications is included as a part of this specification.

The present invention relates to a pouch-type battery cell capable of outputting high voltage.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module or a battery pack in which multiple battery cells are electrically connected is used.

Meanwhile, as types of unit secondary battery cells, cylindrical, prismatic and pouch-type battery cells are known. Since it is desirable for medium-sized to large-sized battery modules to be manufactured as small a size and weight as possible, prismatic batteries and pouch-type batteries that may be stacked with high density and have a small weight-to-capacity ratio are mainly used as battery cells for medium-sized to large-sized battery modules. Additionally, such battery modules or cylindrical battery cells may be aggregated together to form a battery pack.

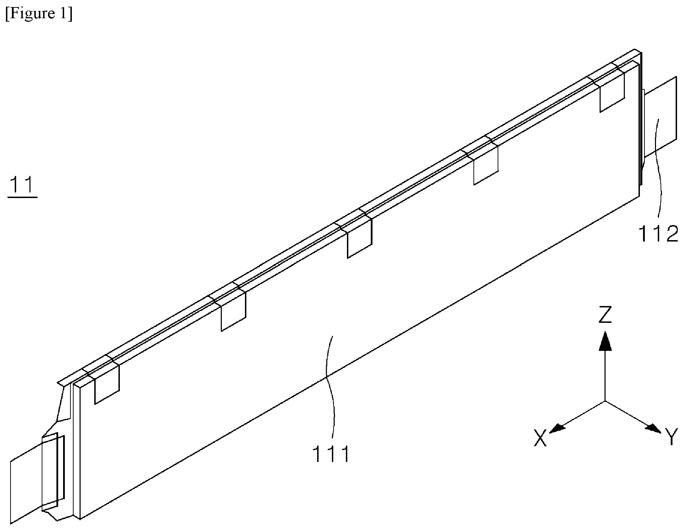

FIG. 1 is a perspective view illustrating a structure of a general pouch-type battery cell. Referring to FIG. 1, a general pouch-type battery cell 11 includes a pouch 111 that accommodates and seals an electrode assembly, and an electrode lead 112 that extends from the electrode assembly and protrudes to the outside of the pouch 111. The electrode assembly is formed by alternately stacking anodes and cathodes in thicknesswise direction with a separator interposed therebetween. The electrode lead 112 includes a positive lead extending from the anode and a negative lead extending from the cathode.

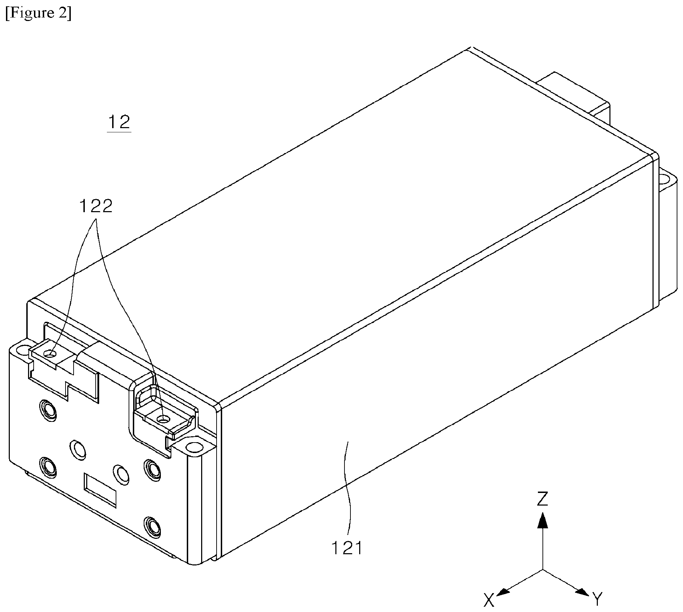

FIG. 2 is a perspective view illustrating a structure of a battery module including the battery cell of FIG. 1. Referring to FIG. 2, the battery module 12 includes a battery cell laminate formed by stacking a plurality of battery cells 11 in thicknesswise direction and a module frame 121 that accommodates the battery cell laminate. Here, a bus bar connects a plurality of electrode leads 112 in series or parallel, and the bus bar is connected to a terminal 122 exposed to the outside of the module frame 121.

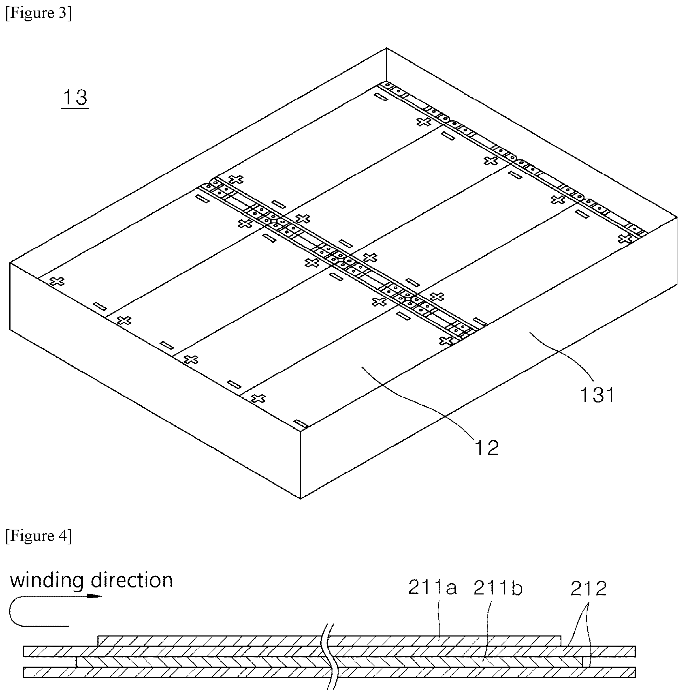

FIG. 3 is a perspective view illustrating a structure of a battery pack including the battery module of FIG. 2. Referring to FIG. 3, the battery pack 13 includes a plurality of the battery modules 12 and a pack frame 131 that accommodates the plurality of the battery modules 12. Bus bar connects the plurality of terminals 122 in series or parallel.

The disadvantages of battery modules and battery packs including pouch-type battery cells described above are that tolerances are very likely to exist as manufactured by stacking a plurality of pouches, and ignition of only one cell causes flame to spread to the entire module and even the entire pack as heat propagation easily occurs between battery cells. In addition, it is problematic that the structure becomes complex and the energy density decreases since battery cells first form a battery module, and battery modules then form a battery pack rather than battery cells directly forming a battery pack.

FIG. 4 is a plan view illustrating a structure of the electrode laminate constituting a jelly-roll type electrode assembly. Referring to FIG. 4, the jelly-roll type electrode assembly 21 built into the cylindrical battery cell is manufactured by winding along winding direction an electrode laminate in which the anode 211a, separator 212, cathode 211b and separator 212 are sequentially stacked. Here, a non-coated anode area and a non-coated cathode area that are not coated with an active material layer for a battery reaction are provided at the one axial end and the other axial end of the anode 211a and the cathode 211b, respectively.

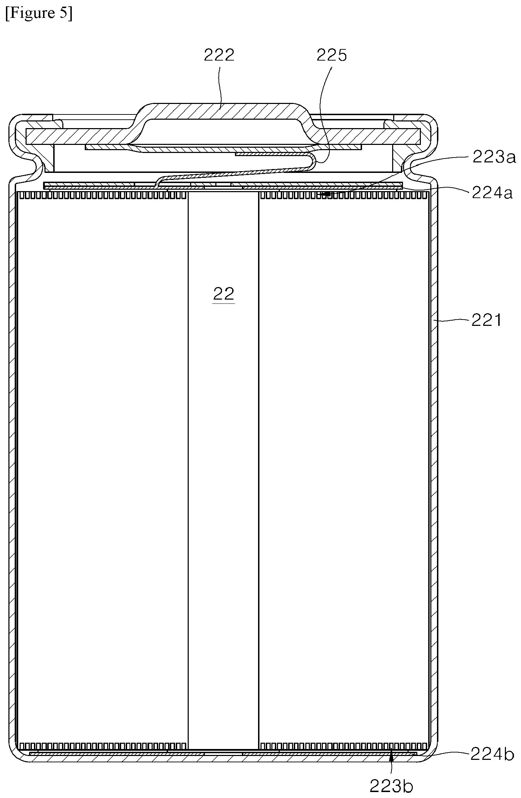

FIG. 5 is a cross-sectional view illustrating a structure of a cylindrical battery cell including the jelly-roll type electrode assembly of FIG. 4. Referring to FIG. 5, the cylindrical battery cell 22 is manufactured by connecting a non-coated cathode area 223b a the battery can 221 through a negative current collector plate 224b and the non-coated anode area 223a to a top cap 222 covering the upper portion of the battery can 221 through a positive current collector plate 224a and an electrode tab 225 extending from the positive current collector plate 224a after the electrode assembly 21 is accommodated in the cylindrical battery can 221. Here, the top cap 222 serves as a positive terminal of the battery cell 22, and the battery can 221 serves as a negative terminal of the battery cell 22.

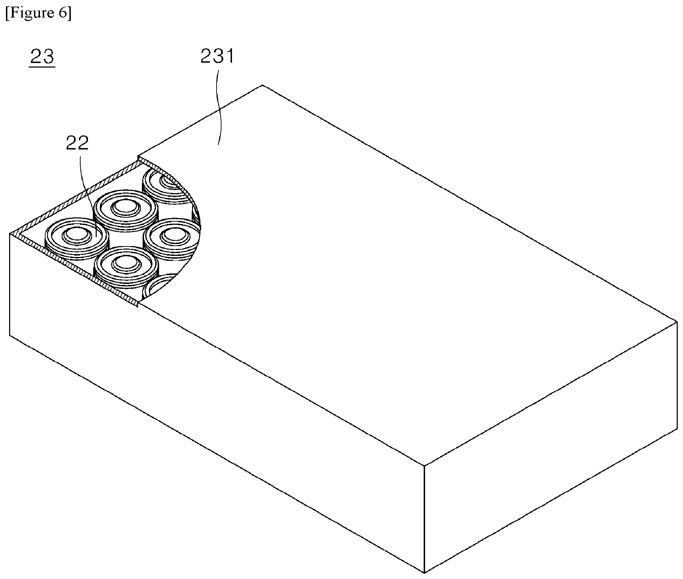

FIG. 6 is a perspective view illustrating a structure of a battery pack including the battery cell of FIG. 5. Referring to FIG. 6, a battery pack 23 includes a plurality of the battery cells 22 and a pack frame 231 for accommodating the plurality of the battery cells 22. A plurality of the positive terminals and a plurality of negative terminals may be connected to each other in series or parallel through a bus bar.

The disadvantages of the cylindrical battery cell described above and the battery pack including the same are that the current collector plate, battery can, top cap, etc. are made of metal and are heavy, and unlike when using a flexible pouch, it is difficult to change the manufacturing process, and the manufacturing process is complex due to multiple processes such as beading, crimping and welding.

### [DISCLOSURE]

### [TECHNICAL PROBLEM]

In order to solve the problems of the above-described prior art, it is an object of the present invention to provide: a battery cell and that has a simple structure to facilitate manufacturing, is not vulnerable to tolerances, and has light weight, and a structure of a battery pack including the same.

It is another object of the present invention to provide: a battery cell capable of reducing or preventing heat propagation between electrodes and cells and facilitating heat discharge; and a structure of a battery pack including the same.

It is yet another object of the present invention to provide: a battery cell wherein the manufacturing process and manufacturing specifications may be easily changed and the output voltage and capacity may be easily changed to meet requirements; and a structure of a battery pack

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a pouch-type battery cell including an electrode assembly having therein a first electrode and a second electrode alternately stacked with a separator therebetween; a pouch accommodating the electrode assembly, and a first electrode lead and a second electrode lead extending from the first electrode and the second electrode, respectively, and protruding out of the pouch, wherein the electrodes and the separator are stacked in axial direction, and the pouch made of a flexible sheet comprises: a peripheral member covering an outer circumferential surface of the electrode assembly; and a pair of lid members covering the two axial ends of the electrode assembly, respectively.

In one embodiment of the present invention, each of the first electrode, the second electrode, the separator and the lid members may be circular. Accordingly, each of the electrode assembly and the battery cell may be cylindrical.

In another embodiment of the present invention, each of the first electrode, the second electrode, the separator, and the lid members may be rectangular. Each of the first electrode, the second electrode, the separator, and the lid members may be rectangular with right angle at the vertex, or rectangular with rounded corners in a broad sense. Accordingly, each of the electrode assembly and the battery cell may have a square pillar or rectangular parallelepiped shape.

The shape of each of the electrode, the separator, and the lid member is not limited thereto, and each of the electrode, the separator, and the lid members may have any shape as long as the shapes of the electrode, the separator, and the lid members correspond to one another such that each of the electrode assembly and the battery cell is in the form of a single pillar.

In one embodiment of the present invention, the peripheral member may be provided at a first sealing part where two ends of the sheet are fused to each other. Here, the peripheral member may be provided where inner surfaces of the two ends of the sheet are fused to each other, or where an inner surface of one end of the two ends and an outer surface of other end of the two ends are fused to each other. As described above, the sheet may have various shapes such as a rectangle or parallelogram as long as the two ends are fused together forming a pipe shape surrounding the outer circumferential surface of the electrode assembly.

In another embodiment of the present invention, the peripheral member may be provided at a plurality of first sealing parts where inner surfaces of ends of a plurality of sheets are fused to one another. For example, the peripheral member may be provided by fusing two ends of each of two sheets having horizontally symmetric shape together, respectively.

The peripheral member may be formed by fusing the sheet while surrounding the electrode assembly, or may be formed to have a sleeve shape by fusing the sheet in advance before inserting the electrode assembly therein.

The peripheral member and the lid members may be fused to one another at a second sealing part. It is preferable that the inner surfaces of the peripheral member and the lid members are fused to one another. At least one of the peripheral member and the lid members may be plastically deformed in advance to facilitate fusion. For example, the lid member may be plastically deformed to be recessed axially inward, or the peripheral member may be plastically deformed to protrude axially outward at the two axial ends thereof.

In one embodiment of the present invention, the electrode lead may protrude through a slit provided in the lid members. Here, an insulating layer simultaneously insulating and sealing the electrode lead and the lid members may be provided at the slit. The insulating layer may provide fusion sealing between the slit and the electrode lead. The electrode lead may be connected to the electrode while being coupled to the lid member, or may be coupled to the lid member and penetrate the slit while being connected to the electrode.

In another embodiment of the present invention, the electrode lead may protrude between the peripheral member and the lid members. Here, the electrode lead may also be sealed at the second sealing part. The electrode lead may be connected to the electrode before the peripheral member and the lid member are fused to each other.

The present invention also provides a structure of a battery pack including a pouch-type battery cell, a pack frame accommodating the battery cell, and a bus bar connected to an electrode lead.

The battery pack may include an insulating material that fills the space between the battery cells inside the frame. The insulating material may be any material as long as heat propagation between the battery cells is reduced or prevented. The insulating material may include a compressible material.

In one embodiment of the present invention, the battery cell may be disposed within a frame in a manner that a first electrode lead faces a first direction and a second electrode lead faces a second direction. Here, the bus bar may include a first bus bar connected to the first electrode lead at one side of the battery cell and a second bus bar connected to the second electrode lead at the other side of the battery cell. In such case, the battery cells may be connected in parallel between the first bus bar and the second bus bar.

In another embodiment of the present invention, the battery cell may include a first group of cells arranged within the pack frame in a manner that the first electrode lead faces a first direction and the second electrode lead faces a second direction, and a second group of cells arranged within the pack frame in a manner that the first electrode lead faces the second direction and the second electrode lead faces a third direction. Here, the bus bar may include: a first bus bar connected to the first electrode lead of the first group of cells at one side of the battery cell; a second bus bar connected to the second electrode lead of the first group of cells and the first electrode lead of the second group of cells at the other side of the battery cell; and a third bus bar connected to the second electrode lead of the second group of cells at the one side of the battery cell. **In** such case, the first group of cells are connected in parallel with each other between the first bus bar and the second bus bar, and the second group of cells are connected in parallel with each other between the second bus bar and the third bus bar such that the first group of cells and the second group of cells are connected in series with each other.

The output voltage of one battery cell may be equal to or half of that of the battery pack. Accordingly, the bus bar may satisfy the required voltage of the battery pack simply by connecting one or two groups of battery cells in parallel, thereby simplifying the structure thereof.

A thermally conductive layer having insulating properties and thermal conductivity may be interposed between the bus bar and the frame.

The present invention also provides a vehicle including the battery pack. Since the structure of the vehicle is known to those skilled in the art, separate description thereof will not be given herein.

### [ADVANTTAGEOUS EFFECTS]

The present invention, wherein pouch-type battery cells are accommodated in a pack as is, provides a battery cell and a structure of battery pack which is simple and easy to manufacture and has light weight by connecting most cells in parallel with only a few bus bars. The present invention also provides a battery cell and a structure of a battery pack that is not vulnerable to tolerances by arranging battery cells with a space therebetween rather than stacking the battery cells on top of each other.

Another advantage of the structure of the battery cell provided by the present invention is that, unlike a jelly-roll type electrode assembly in which one anode and one cathode are provided, the electrode assembly has multiple anodes and cathodes are stacked with multiple separators interposed therebetween such that heat propagation between electrodes is delayed or prevented, and, unlike an electrode assembly accommodated in a thick battery can, the electrode assembly is accommodated in a thin pouch such that heat discharge is promoted. Another advantage of the structure of the battery pack provided by the present invention is that heat propagation between cells is delayed or prevented by arranging a plurality of battery cells with an insulating material interposed therebetween, and heat discharge is promoted by providing thermally conductive layer between the small number of simplified bus bar and the pack frame.

The battery cell according to the present invention is capable of outputting the high voltage required by a medium to large-sized battery module or battery pack with only one or two battery cells such that a battery pack may be manufactured directly with only battery cells without an intermediate unit so-called a battery module. Unlike the battery can with rigid body, which requires complex processes such as beading and crimping, the battery cell according to the present invention is manufactured using a flexible pouch, such that change to the manufacturing process and specifications is facilitated. Increasing or decreasing the voltage of the battery cell may also be facilitated by simply changing the cutting dimensions of the pouch and the number of stacked electrodes. Additionally, since such high voltage cells are used, most of the cells are connected in parallel to each other, which simplifies the structure of the bus bar, thereby providing a thermally conductive layer at the bus bar is facilitated and simplifying the manufacturing of the battery pack.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 is a perspective view illustrating a structure of a general pouch-type battery cell.
FIG. 2 is a perspective view illustrating a structure of a battery module including the battery cell of FIG. 1.
FIG. 3 is a perspective view illustrating a structure of a battery pack including the battery module of FIG. 2.
FIG. 4 is a plan view illustrating a structure of the electrode laminate constituting a jelly-roll type electrode assembly.
FIG. 5 is a cross-sectional view illustrating a structure of a cylindrical battery cell including the jelly-roll type electrode assembly of FIG. 4.
FIG. 6 is a perspective view illustrating a structure of a battery pack including the battery cell of FIG. 5.
FIG. 7 is a cross-sectional view illustrating a structure of an electrode assembly according to a first embodiment of the present invention.
FIG. 8 is a perspective view illustrating a structure of an electrode assembly according to the first embodiment of the present invention.
FIGS. 9 and 10 are a perspective view and a cross-sectional view, respectively, illustrating a structure of a battery cell according to the first embodiment of the present invention.
FIGS. 11 to 13 are a perspective view, a cross-sectional view and a longitudinal sectional view, respectively, illustrating a structure of a battery pack according to the first embodiment of the present invention.
FIG. 14 is a perspective view illustrating a structure of an electrode assembly according to a second embodiment of the present invention.
FIGS. 15 and 16 are a perspective view and a latitudinal sectional view, respectively, illustrating a structure of a battery cell according to the second embodiment of the present invention.
FIGS. 17 to 19 are a perspective view, a latitudinal sectional view and a longitudinal sectional view, respectively, illustrating a structure of a battery pack according to the second embodiment of the present invention.
FIG. 20 is a perspective view illustrating a structure of a vehicle according to the present invention.

### [DESCRIPTION OF REFERENCE NUMERALS]

11: battery cell
   111: pouch
   112: electrode lead
12: battery module
   121: module frame
   122: terminal
13: battery pack
   131: pack frame
21: electrode assembly
   211: electrode
      211a: anode
      211b: cathode
   212: separator
22: battery cell
   221: battery can
   222: top cap
   223: electrode non-coated area
      223a: non-coated anode area
      223b: non-coated cathode area
   224: current collector plate
      224a: positive current collector plate
      224b: negative current collector plate
   225: electrode tab
23: battery pack
   231: pack frame
31: electrode assembly
   311: electrode
      311a: first electrode
      311b: second electrode
   312: separator
32: battery cell
   321: peripheral member
      321S: first sealing part
   322: lid member
      322S: second sealing part
   323: electrode lead
      323a: first electrode lead
      323b: second electrode lead
   324: insulating layer
33: battery pack
   331: pack frame
   332: bus bar
      332a: first bus bar
      332b: second bus bar
   333: insulating material
   334: thermally conductive layer
41: electrode assembly
   411: electrode
      411a: first electrode
      411b: second electrode
   412: separator
42: battery cell
   421: peripheral member
      421S: first sealing part
   422: lid member
      422S: second sealing part
   423: electrode lead
      423a: first electrode lead
      423b: second electrode lead
   424: insulating layer
43: battery pack
   431: pack frame
   432: bus bar
      432a: first bus bar
      432b: second bus bar
      432c: third bus bar
   433: insulating material
   434: thermally conductive layer
P: battery pack
V: vehicle
X1: lengthwise direction
Y1: thicknesswise direction/widthwise direction
Z1: heightwise direction
X2: lengthwise direction/circumferential direction
Y2: radial direction
Z2: heightwise direction/thicknesswise direction/axial direction

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a pouch-type battery cell and a structure of a battery pack including the pouch-type battery cell, the pouch-type battery cell including: an electrode assembly having therein a first electrode and a second electrode alternately stacked with a separator therebetween; and a pouch accommodating the electrode assembly, the electrode lead includes a first electrode lead and a second electrode lead extending from the first electrode and the second electrode, respectively, and protruding out of the pouch, the first electrode, the second electrode and the separator are stacked in axial direction, and the pouch made of a flexible sheet includes: a peripheral member covering an outer circumferential surface of the electrode assembly; and a pair of lid members covering the two axial ends of the electrode assembly, respectively.

Hereinafter, a preferred embodiment of the present invention will be described with reference to the accompanying drawings.

### [FIRST EMBODIMENT]

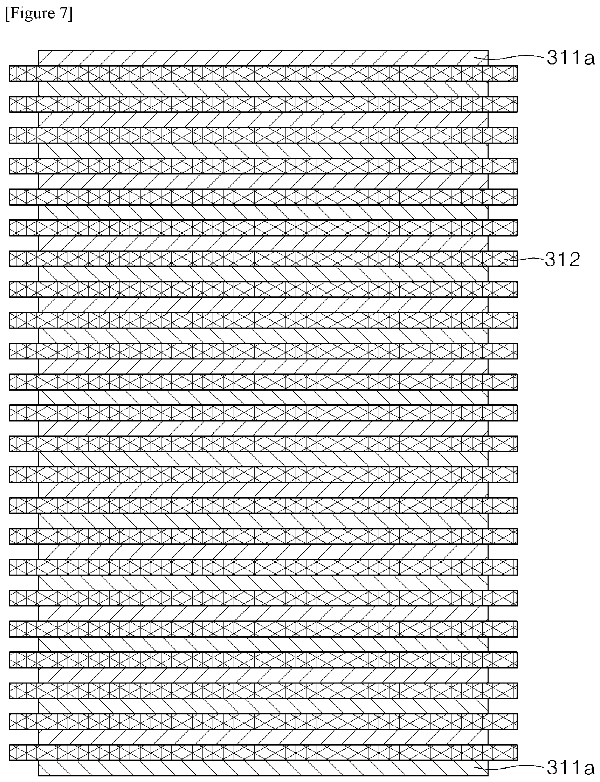

FIG. 7 is a cross-sectional view illustrating the structure of an electrode assembly according to the first embodiment of the present invention. Referring to FIG. 7, the electrode assembly 31 may be formed by alternately stacking a plurality of first electrodes 311a and a plurality of second electrodes 311b with a separator 312 therebetween in axial direction.

The electrode assembly 31 according to the first embodiment is advantageous in that the speed and range of heat propagation are reduced when the electrode ignites, compared to a jelly-roll type electrode assembly formed by winding one long anode sheet and one long cathode sheet. In the jelly-roll type electrode assembly, when the electrode ignites, heat propagation occurs rapidly through all electrode sheets spanning the entire axial cross-section and entire axial length such that there is a high risk of the entire electrode assembly igniting. However, in the electrode assembly 31 according to the present invention, heat propagation between the electrodes 311 is delayed or prevented since the electrodes 311 are provided in plurality with a separator interposed therebetween along the axial direction, and thus, ignition of the entire electrode assembly 31 is delayed or prevented.

The electrode assembly 31 according to the embodiment also advantageous in that high voltage may be outputted due to a large number of stacks of the electrodes 311. Description will be given regarding this feature along with the structure of the battery pack.

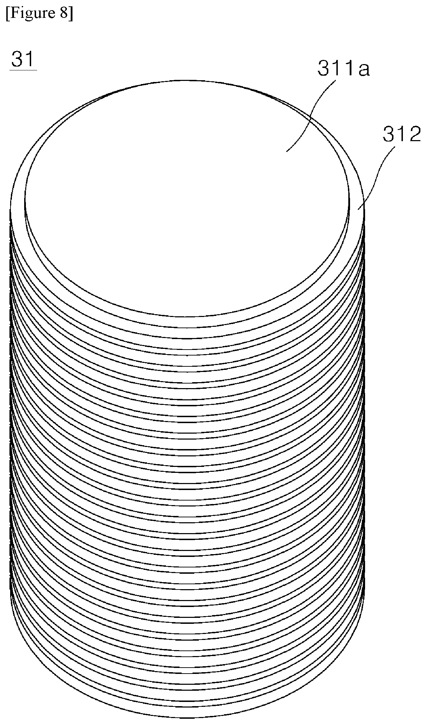

FIG. 8 is a perspective view illustrating a structure of an electrode assembly according to the first embodiment of the present invention. Referring to FIG. 8, each of the electrode 311, the separator 312 and the lid members 322 may be circular. Accordingly, each of the electrode assembly 31 and the battery cell may be cylindrical. The shapes of the electrode 311, the separator 312 and the lid members 322 are not limited thereto, and each of the electrode 311, the separator 312, and the lid members 322 may have any shape as long as the shapes of the electrode 311, the separator 312, and the lid members 322 correspond to one another such that each of the electrode assembly 31 and the battery cell is in the form of a single pillar.

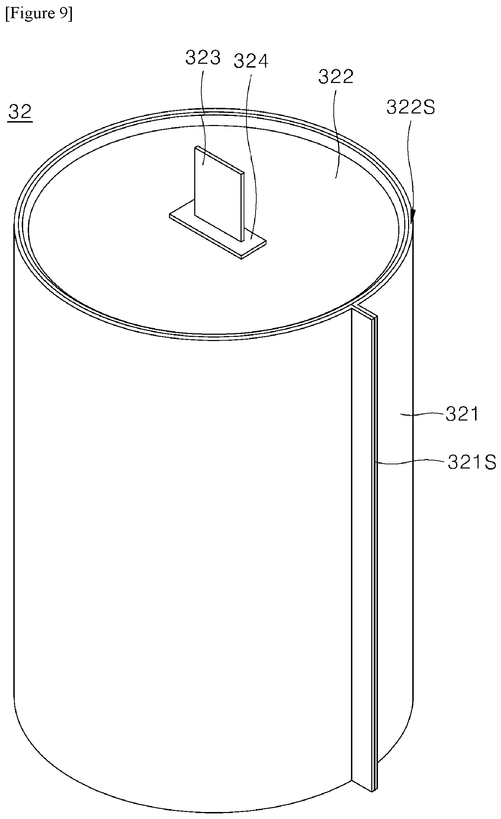

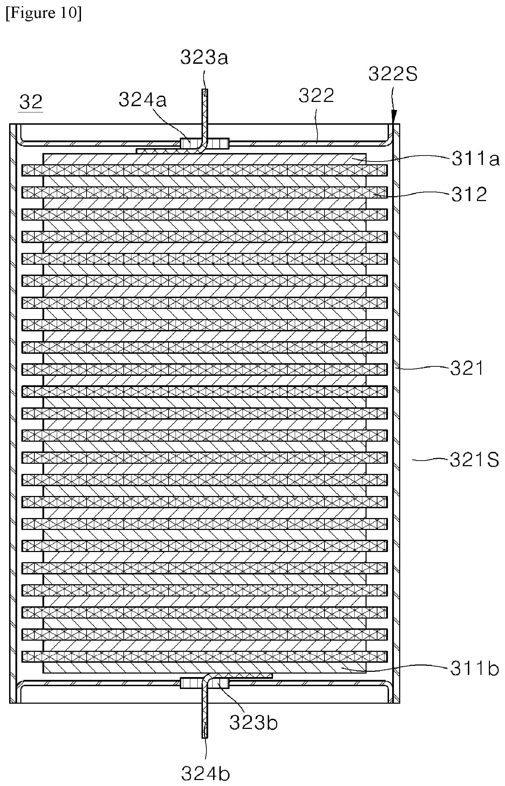

FIGS. 9 and 10 are a perspective view and a cross-sectional view, respectively, illustrating a structure of a battery cell according to the first embodiment of the present invention. Referring to FIGS. 9 and 10, the battery cell 32 may include the electrode assembly 31, a pouch accommodating the electrode assembly 31, and the electrode lead 323 extending from the electrode 311 and protruding outside the pouch.

The pouch may be made of a flexible sheet and may include a peripheral member 321 covering the outer circumferential surface of the electrode assembly and a pair of lid members 322 covering the two axial ends of the electrode assembly, respectively.

The peripheral member 321 may be provided at a first sealing part 321S where two ends of the sheet are fused to each other. Here, the peripheral member 321 may be provided where inner surfaces of the two ends of the sheet are fused to each other, or where an inner surface of one end of the two ends and an outer surface of other end of the two ends are fused to each other. As described above, the sheet may have various shapes such as a rectangle or parallelogram as long as the two ends are fused together forming a pipe shape surrounding the outer circumferential surface of the electrode assembly.

The peripheral member 321 may be formed by fusing the sheet while surrounding the electrode assembly 31, or may be formed to have a sleeve shape by fusing the sheet in advance before inserting the electrode assembly 31 therein.

The peripheral member 321 and the lid members 322 may be fused to one another at a second sealing part 322S. It is preferable that the inner surfaces of the peripheral member 321 and the lid members 322 are fused to one another. At least one of the peripheral member 321 and the lid members 322 may be plastically deformed in advance to facilitate fusion. For example, the lid members 322 may be plastically deformed to be recessed axially inward, or the peripheral member 321 may be plastically deformed to protrude axially outward at the two axial ends thereof.

The electrode lead 323 may protrude through a slit provided in the lid member 322. Here, an insulating layer 324 simultaneously insulating and sealing the electrode lead 323 and the lid members 322 may be provided at the slit. The insulating layer 324 may provide fusion sealing between the slit and the electrode lead 323. The electrode lead 323 may be connected to the electrode while being coupled to the lid member 322, or may be coupled to the lid member 322 and penetrate the slit while being connected to the electrode 311.

The battery cell 32 according to the second embodiment may include the electrode assembly 31, the pouch and the electrode lead 323, the electrode assembly 31 may be formed by stacking in the axial direction the circular first electrode 311a, the circular second electrode 311b and the circular separator 312, the pouch may include the peripheral member 321 and the lid member 322, the peripheral member 321 may be provided at a first sealing part 321S by fusing the inner surfaces of a rectangular sheet surrounding the electrode assembly 31 to each other, a pair of lid members 322 are plastically deformed to be recessed axially inward such that the inner surface of the periphery thereof is fused to the inner surfaces of the two axial ends of the peripheral member 321 at the second sealing part 322S, the lid member 322 may include a slit penetrated by the electrode lead 323 and the insulating layer 324 sealing and insulating between the electrode lead 323 and the slit, and the electrode lead 323 may be connected to the electrode 311 while being coupled to the lid member 322.

**In** the battery cell 32 according to the first embodiment, heat propagation between the electrodes 311 may be delayed or prevented and high voltage may be outputted since a plurality of electrodes 311 are stacked in axial direction. In addition, since the battery cell 32 is accommodated in the pouch made of a flexible sheet rather than a thick battery can, heat discharge is facilitated, manufacturing is simplified, the weight is light, and changes in the manufacturing process and specifications are simple.

The present invention also provides a structure of a battery pack including the pouch-type battery cell, the pack frame accommodating the battery cell and the bus bar connected to the electrode lead.

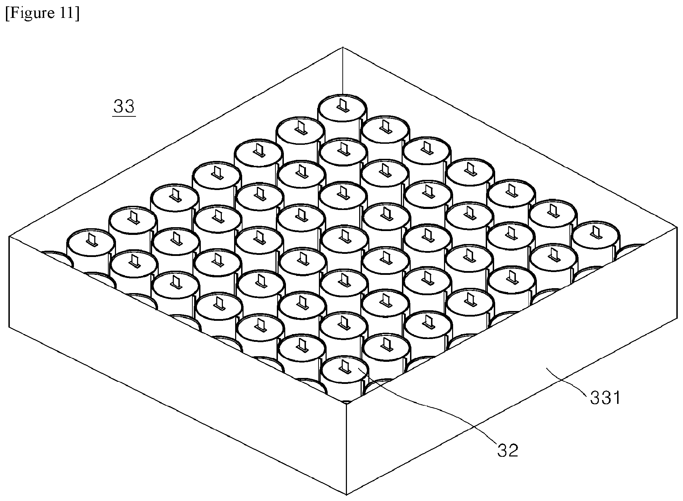

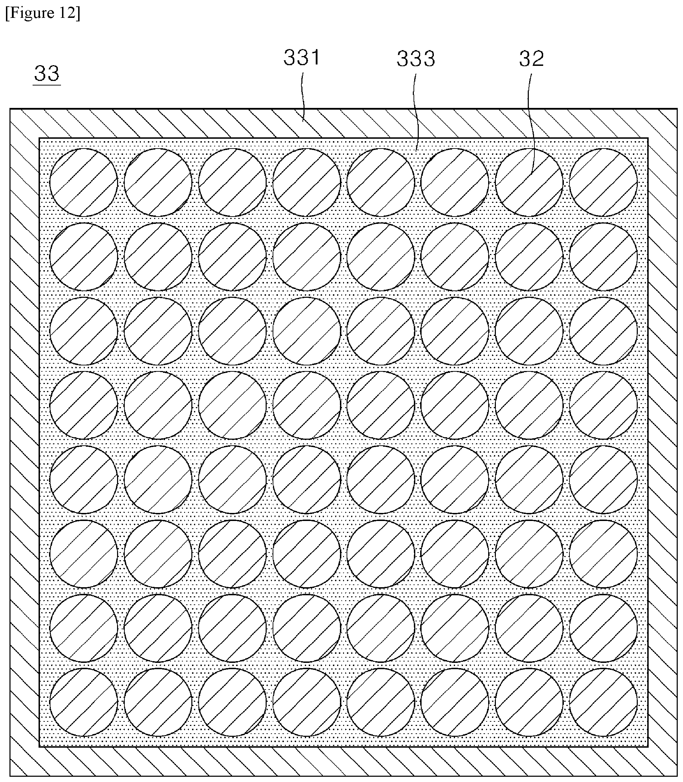

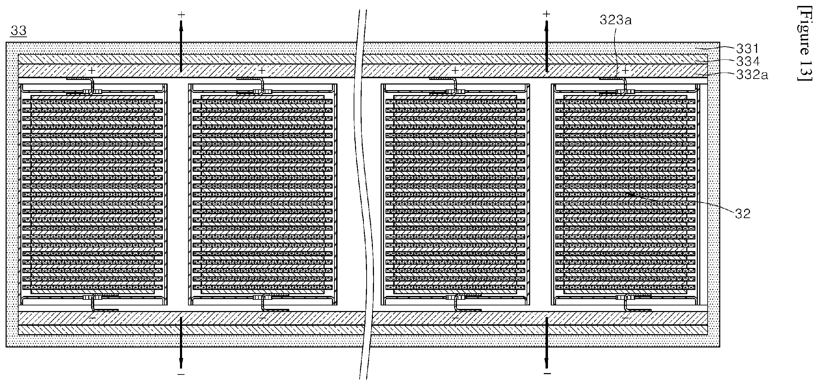

FIGS. 11 to 13 are a perspective view, a cross-sectional view and a longitudinal sectional view, respectively, illustrating a structure of a battery pack according to the first embodiment of the present invention. Referring to FIGS. 11 to 13, the battery pack 33 may include the battery cell 32, a pack frame 331 accommodating the battery cell 32 and a bus bar 332 connected to the electrode lead 323.

The battery pack 33 may include an insulating material 333 that fills the space between the battery cells 32 inside the frame 331. The insulating material 333 may be any material as long as heat propagation between the battery cells is reduced or prevented. The insulating material 333 may include a compressible material.

According to the embodiment, as the battery cell 32 has a circular cross-section, the space between the battery cells 32 may be increased, and as the space between the batteries is filled with the insulating material 333, heat propagation between the battery cells 32 may be delayed or prevented. Additionally, when the insulating material 333 has compressibility, the insulating material 333 may also have the function of absorbing the tolerance of the battery cell 32.

The battery cell 32 may be disposed within a frame 331 in a manner that a first electrode lead 323a faces a first direction and a second electrode lead 323b faces a second direction. Here, the bus bar 332 may include a first bus bar 332a connected to the first electrode lead 323a at one side of the battery cell 32 and a second bus bar 332b connected to the second electrode lead 323b at the other side of the battery cell 32. In such case, the battery cells 32 may be connected in parallel between the first bus bar 332a and the second bus bar 332b.

The output voltage of one battery cell 32 may be equal to or half of that of the battery pack 33. Accordingly, the bus bar 332 may satisfy the required voltage of the battery pack 33 simply by connecting one or two groups of battery cells 32 in parallel, thereby simplifying the structure thereof.

A thermally conductive layer 334 having insulating properties and thermal conductivity may be interposed between the bus bar 332 and the frame 331. The thermally conductive layer 334 may include a synthetic resin material having thermal conductivity and insulating properties.

According to the embodiment, since the battery cell 32 is capable of outputting high voltage, the number of bus bars 332 may be reduced and the structure may be simplified. As a result, the manufacturing of the battery pack 33 is simplified, change in the manufacturing process and specifications is facilitated, and the contact area between the bus bar 332 and the pack frame 331 may be increased, which may be advantageous for heat discharge.

### [SECOND EMBODIMENT]

Hereinafter, descriptions of parts not separately given in the second embodiment are the same as those in the first embodiment.

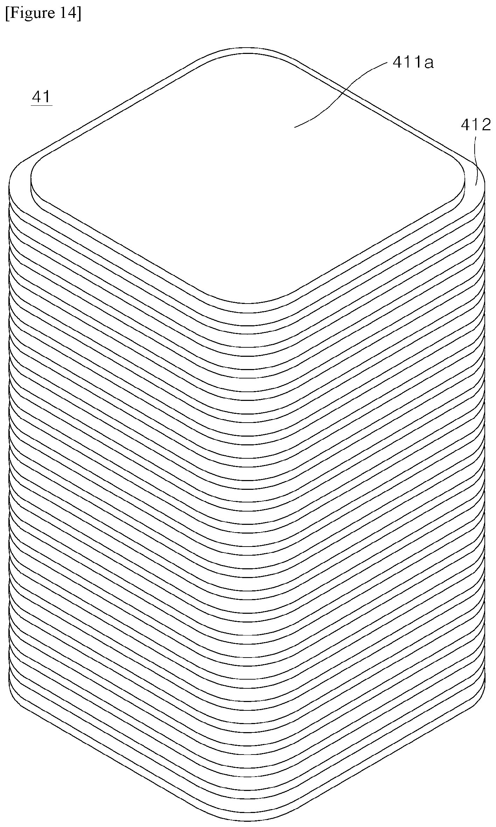

FIG. 14 is a perspective view illustrating a structure of an electrode assembly according to a second embodiment of the present invention. Referring to FIG. 14, each of the electrode 411, the separator 412 and the lid member 422 may be rectangular. Each of the electrode 411, the separator 412 and the lid member 422 may be rectangular with right angle at the vertex, or rectangular with rounded corners in a broad sense. Accordingly, each of the electrode assembly 41 and the battery cell 42 may have a square pillar or rectangular parallelepiped shape.

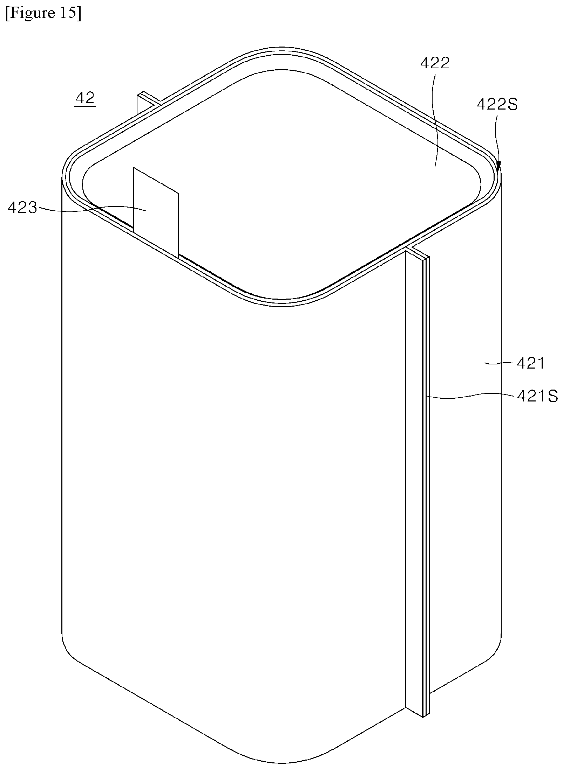

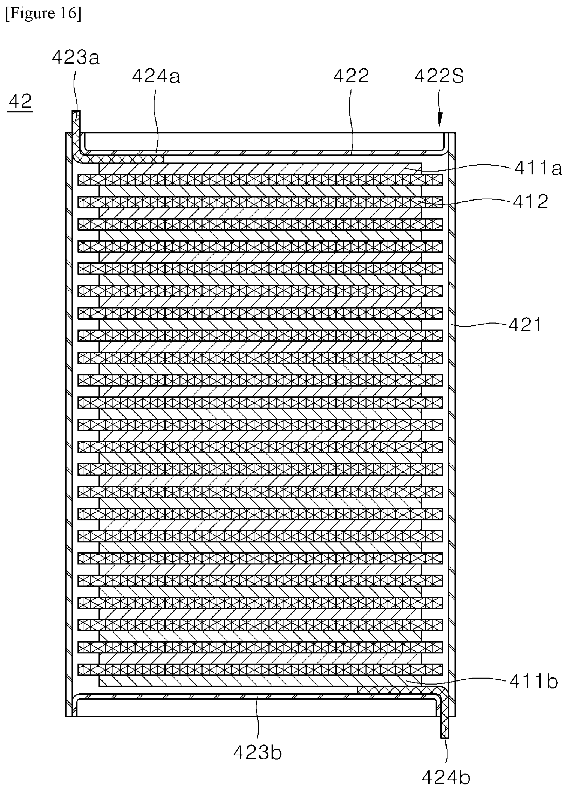

FIGS. 15 and 16 are a perspective view and a latitudinal sectional view, respectively, illustrating a structure of a battery cell according to the second embodiment of the present invention. Referring to FIGS. 15 and 16, the peripheral member 421 may be provided at a plurality of first sealing parts 421S where inner surfaces of ends of a plurality of sheets are fused to one another. For example, the peripheral member 421 may be provided by fusing two ends of each of two sheets having horizontally symmetric shape together, respectively.

The electrode lead 423 may protrude between the peripheral member 421 and the lid member 422. Here, the electrode lead 423 may also be sealed at the second sealing part 422S. The electrode lead 423 may be connected to the electrode before the peripheral member 421 and the lid member 422 are fused to each other.

The battery cell 42 according to the second embodiment may include the electrode assembly 41, the pouch and the electrode lead 423, the electrode assembly 41 may be formed by stacking in the axial direction the first electrode 411a, the second electrode 411b and the separator 412, each of which has a square shape with rounded corners, the pouch may include the peripheral member 421 and the lid member 422, the peripheral member 421 may be provided at a pair of first sealing parts 421S by fusing the inner surfaces of a pair of rectangular sheets surrounding the electrode assembly 41 to each other, a pair of lid members 422 are plastically deformed to be recessed axially inward such that the inner surface of the periphery thereof is fused to the inner surfaces of the two axial ends of the peripheral member 421 at the second sealing part 422S, and the electrode lead 423 may protrude out of the pouch through the second sealing part 422S while connected to the electrode 411 and be sealed together with the peripheral member 421 and the lid member 422.

Since the shape of the pouch and the position of the first sealing part 421S are symmetric, respectively, and the overall shape thereof is close to a rectangular parallelepiped, the battery cell 42 according to the embodiment is advantageous in that placement and connection are facilitated and energy density is secured.

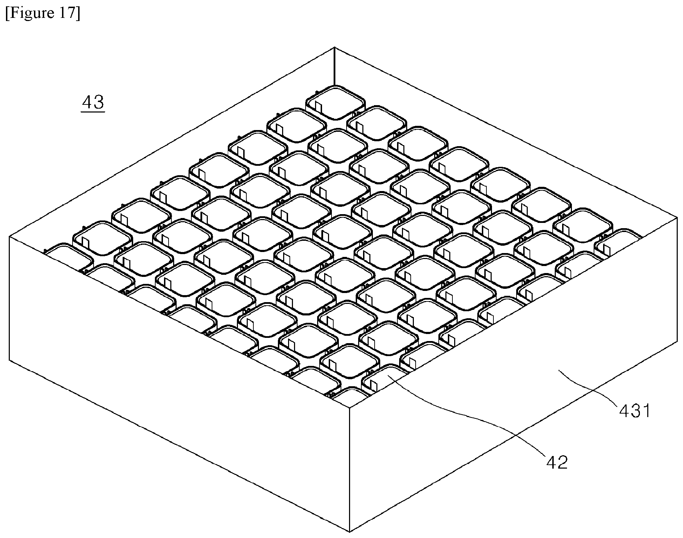

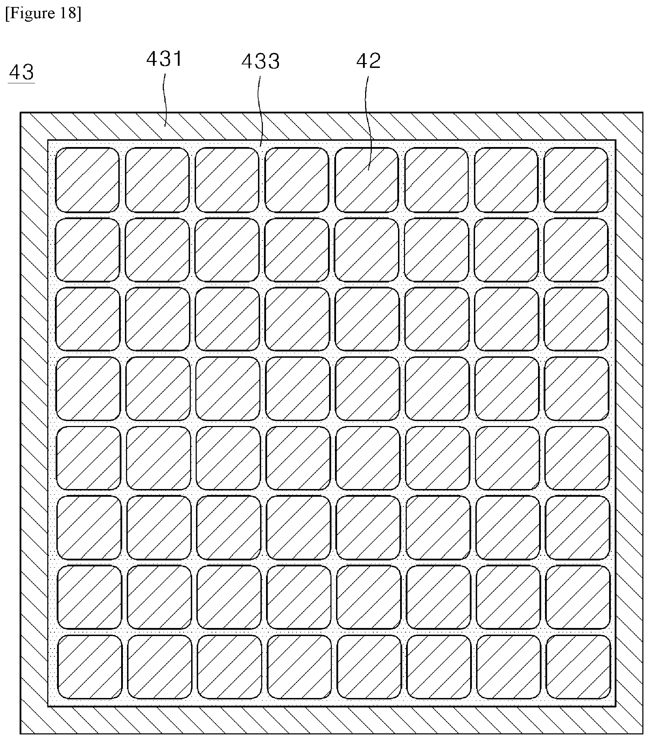

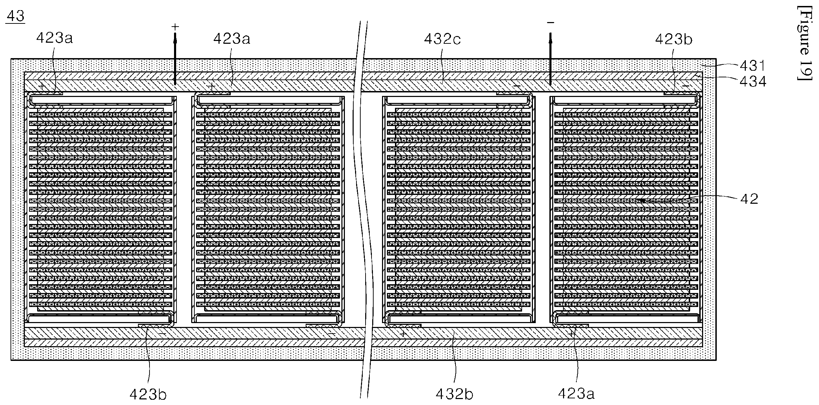

FIGS. 17 to 19 are a perspective view, a latitudinal sectional view and a longitudinal sectional view, respectively, illustrating a structure of a battery pack according to the second embodiment of the present invention. Referring to FIGS. 17 to 19, the battery cell 42 may include a first group of cells arranged within the pack frame 431 in a manner that the first electrode lead 423a faces a first direction and the second electrode lead 423b faces a second direction, and a second group of cells arranged within the pack frame 431 in a manner that the first electrode lead 423a faces the second direction and the second electrode lead 423b faces a third direction. Here, the bus bar 432 may include: a first bus bar 432a connected to the first electrode lead 423a of the first group of cells at one side of the battery cell 42; a second bus bar 432b connected to the second electrode lead 423b of the first group of cells and the first electrode lead 423a of the second group of cells at other side of the battery cell 42; and a third bus bar 432c connected to the second electrode lead 423b of the second group of cells at the one side of the battery cell 42. In such case, the first group of cells are connected in parallel with each other between the first bus bar 432a and the second bus bar 432b, and the second group of cells are connected in parallel with each other between the second bus bar 432b and the third bus bar 432c such that the first group of cells and the second group of cells are connected in series with each other.

The output voltage of one battery cell 42 may be equal to or half of that of the battery pack 43. Accordingly, the bus bar 432 may satisfy the required voltage of the battery pack 43 simply by connecting one or two groups of battery cells 42 in parallel, thereby simplifying the structure thereof.

According to the second embodiment, since the battery cell 42 is rectangular, the battery cell 42 may be accommodated in the pack frame 431 with a higher degree of density, and thus the battery pack 43 may have a high energy density. Additionally, due to the arrangement of the bus bar 432, the battery pack 43 is advantageous in that the anode and the cathode terminals thereof face the same direction.

The present invention also provides a vehicle including the battery pack.

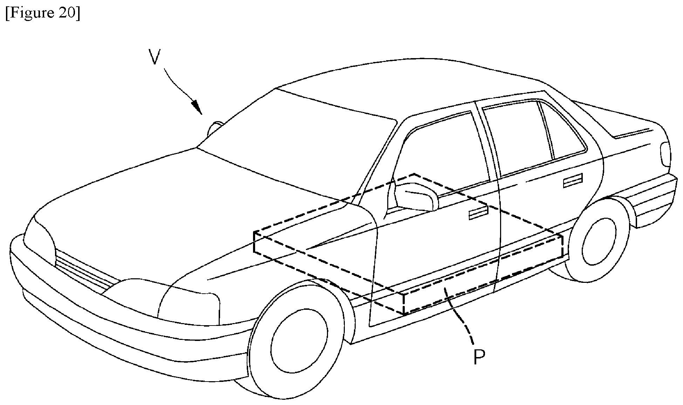

FIG. 20 is a perspective view illustrating the structure of a vehicle according to the present invention. Referring to FIG. 20, the battery pack P may be built into the vehicle V as a power source. Since the structure of the vehicle is known to those skilled in the art, separate description thereof will not be given herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a pouch-type battery cell provided with an electrode lead;
a pack frame accommodating the battery cell; and
a bus bar connected to the electrode lead,
wherein the battery cell comprises: an electrode assembly having therein a first electrode and a second electrode alternately stacked with a separator therebetween; and a pouch accommodating the electrode assembly,
the electrode lead comprises a first electrode lead and a second electrode lead extending from the first electrode and the second electrode, respectively, and protruding out of the pouch,
the first electrode, the second electrode and the separator are stacked in axial direction, and
the pouch made of a flexible sheet comprises: a peripheral member covering an outer circumferential surface of the electrode assembly; and a pair of lid members covering the two axial ends of the electrode assembly, respectively.

2. The battery pack of claim 1, wherein each of the first electrode, the second electrode, the separator and the lid members is circular.

3. The battery pack of claim 1, wherein each of the first electrode, the second electrode, the separator, and the lid members is rectangular.

4. The battery pack of claim 1, wherein each of the first electrode, the second electrode, the separator and the lid members are rectangles with rounded corners.

5. The battery pack of claim 1, wherein the peripheral member is provided at a first sealing part where two ends of the sheet are fused to each other.

6. The battery pack of claim 5, wherein the peripheral member is provided where inner surfaces of the two ends of the sheet are fused to each other.

7. The battery pack of claim 5, wherein the peripheral member is provided where an inner surface of one end of the two ends and an outer surface of other end of the two ends are fused to each other.

8. The battery pack of claim 1, wherein the peripheral member is provided at a plurality of first sealing parts where inner surfaces of ends of a plurality of sheets are fused to one another.

9. The battery pack of claim 1, wherein the peripheral member and the lid members are fused to one another at a second sealing part.

10. The battery pack of claim 1, wherein the electrode lead protrudes through a slit provided in the lid members.

11. The battery pack of claim 10, wherein an insulating layer insulating and sealing the electrode lead and the lid members simultaneously is provided at the slit.

12. The battery pack of claim 9, wherein the electrode lead protrudes between the peripheral member and the lid members.

13. The battery pack of claim 1, further comprising an insulating material filling a space between the battery cell in the pack frame.

14. The battery pack of claim 1, wherein the battery cell is disposed within the pack in a manner that the first electrode lead faces a first direction and the second electrode lead faces a second direction, and
the bus bar comprises: a first bus bar connected to the first electrode lead at one side of the battery cell; and a second bus bar connected to the second electrode lead at other side of the battery cell.

15. The battery pack of claim 14, wherein an output voltage of the battery cell is equal to or half of that of the battery pack.

16. The battery pack of claim 1, wherein the battery cell comprises: a first group of cells arranged within the pack frame in a manner that the first electrode lead faces a first direction and the second electrode lead faces a second direction; and a second group of cells arranged within the pack frame in a manner that the first electrode lead faces the second direction and the second electrode lead faces a third direction, and
the bus bar comprises: a first bus bar connected to the first electrode lead of the first group of cells at one side of the battery cell; a second bus bar connected to the second electrode lead of the first group of cells and the first electrode lead of the second group of cells at other side of the battery cell; and a third bus bar connected to the second electrode lead of the second group of cells at the one side of the battery cell.

17. The battery pack of claim 16, wherein an output voltage of the battery cell is equal to or half of that of the battery pack.

18. The battery pack of claim 1, wherein a thermally conductive layer having insulating property and thermal conductivity is interposed between the bus bar and the pack frame.

19. A vehicle comprising a battery pack of any one of claims 1 to 18.
